# EUROPEAN PATENT APPLICATION

(11) **EP 4 545 889 A1**
(43) Date of publication of application: **30.04.2025**
(21) Application number: 24208432.5
(22) Date of filing: 23.10.2024
(51) Int. Cl.: F25D 23/06

(54) **VACUUM INSULATED STRUCTURE WITH INTERNAL SUPPORTS**

(30) Priority: 26.10.2023 US 202318384125
(71) Applicant: Whirlpool Corporation, Benton Harbor, MI 49022 (US)
(72) Inventor: Allard, Paul B., Benton Harbor, Michigan 49022 (US)
(74) Representative: Eisenführ Speiser

(57) **Abstract**

A vacuum insulated appliance (10) includes a cabinet (12) defining at least one compartment (14, 16). The cabinet (12) includes an outer wrapper (18) having an inner surface (20) and a liner assembly (22) having an inner surface (24). The liner assembly (22) is coupled to the outer wrapper (18) and defines an insulation cavity (26) therebetween. An at least partial vacuum (28) is defined within the insulation cavity (26) biasing the outer wrapper (18) and the liner assembly (22) towards the insulation cavity (26). A plurality of supports (30, 30a, 30b, 30c) having a substantially spherical structure (32) are disposed in the insulation cavity (26). A hollow internal volume (34) of each support (30, 30a, 30b, 30c) is in fluid communication with the insulation cavity (26) through a plurality of apertures (36) defined by each support (30, 30a, 30b, 30c). The plurality of supports (30, 30a, 30b, 30c) is configured to support the outer wrapper (18) and the liner assembly (22).

## Description

### BACKGROUND OF THE DISCLOSURE

The present disclosure generally relates to internal supports for an appliance, and more specifically, to internal supports for a vacuum insulated appliance.

### SUMMARY OF THE DISCLOSURE

According to one aspect of the present disclosure, a vacuum insulated appliance includes a cabinet defining at least one compartment. The cabinet includes an outer wrapper having an inner surface and a liner assembly having an inner surface. The liner assembly is coupled to the outer wrapper and defines an insulation cavity therebetween. An at least partial vacuum is defined within the insulation cavity biasing the outer wrapper and the liner assembly towards the insulation cavity. A plurality of supports having a substantially spherical structure are disposed in the insulation cavity. A hollow internal volume of each support is in fluid communication with the insulation cavity through a plurality of apertures defined by each support. The plurality of supports is configured to support the outer wrapper and the liner assembly.

According to another aspect of the present disclosure, a vacuum insulated refrigerator includes a structural wrapper defining a refrigerator compartment. The structural wrapper defines an insulation cavity and a partial vacuum is defined within the insulation cavity. A pressure differential between an outside atmosphere and the insulation cavity biases the structural wrapper toward the insulation cavity. A plurality of supports having a substantially spherical structure are disposed in the insulation cavity. A hollow internal volume of each support is in fluid communication with the insulation cavity through a plurality of apertures defined by each support. The plurality of supports are configured to support the structural wrapper against the biasing of the pressure differential.

According to yet another aspect of the present disclosure, a method for manufacturing a vacuum insulated cabinet includes providing an outer wrapper, positioning at least one inner liner within the outer wrapper to define an insulation cavity therebetween, the at least one liner defines at least one compartment, and positioning a plurality of supports within the insulation cavity, each support defines an internal volume and includes a plurality of apertures in fluid communication with the internal volume. The method further includes coupling a trim breaker assembly to the outer wrapper and the at least one liner to seal the insulation cavity and drawing an at least partial vacuum within an insulation cavity defined between the outer wrapper and the at least one liner.

These and other features, advantages, and objects of the present disclosure will be further understood and appreciated by those skilled in the art by reference to the following specification, claims, and appended drawings.

### BRIEF DESCRIPTION OF THE DRAWINGS

In the drawings:
FIG. 1 is a front perspective view of a refrigeration appliance, according to the present disclosure;
FIG. 2 is a cross-sectional front perspective view of a refrigeration appliance with a vacuum insulated cabinet and vacuum insulated doors, according to the present disclosure;
FIG. 3 is an exploded side perspective view of a cabinet for a refrigeration appliance with a wrapper, a liner assembly, and a trim breaker assembly, according to the present disclosure;
FIG. 4 is a side perspective view of a refrigeration appliance, according to the present disclosure;
FIG. 5 is a front elevational view of the trim breaker of FIG. 3, according to the present disclosure;
FIG. 6 is a rear elevational view of the trim breaker of FIG. 3, according to the present disclosure;
FIG. 7 is a side perspective view of an internal support, according to the present disclosure;
FIG. 8 is a side perspective view of polygonal perimeters of support faces for a support forming a polyhedron, according to the present disclosure;
FIG. 9A is a cross-sectional view of a support face with a plane defining a polygonal perimeter of the support face, according to the present disclosure;
FIG. 9B is a cross-sectional view of a support face with a plane defining a polygonal perimeter of the support face, according to the present disclosure;
FIG. 9C is a cross-sectional view of a support face with a plane defining a polygonal perimeter of the support face, according to the present disclosure;
FIG. 10 is a side perspective view of an internal support, according to the present disclosure;
FIG. 11A is an enlarged partial cross-sectional view of a cabinet including supports disposed in an insulation cavity, according to the present disclosure;
FIG. 11B is an enlarged partial cross-sectional view of a cabinet including supports disposed in an insulation cavity, according to the present disclosure;
FIG. 11C is an enlarged partial cross-sectional view of a cabinet including supports disposed in an insulation cavity, according to the present disclosure;
FIG. 11D is an enlarged partial cross-sectional view of a cabinet including supports disposed in an insulation cavity, according to the present disclosure; and
FIG. 12 is a flow diagram of a method of manufacturing a vacuum insulated structure, according to the present disclosure.

The components in the figures are not necessarily to scale, emphasis instead being placed upon illustrating the principles described herein.

### DETAILED DESCRIPTION

The present illustrated embodiments reside primarily in combinations of method steps and apparatus components related to internal supports for a vacuum insulated structure. Accordingly, the apparatus components and method steps have been represented, where appropriate, by conventional symbols in the drawings, showing only those specific details that are pertinent to understanding the embodiments of the present disclosure so as not to obscure the disclosure with details that will be readily apparent to those of ordinary skill in the art having the benefit of the description herein. Further, like numerals in the description and drawings represent like elements.

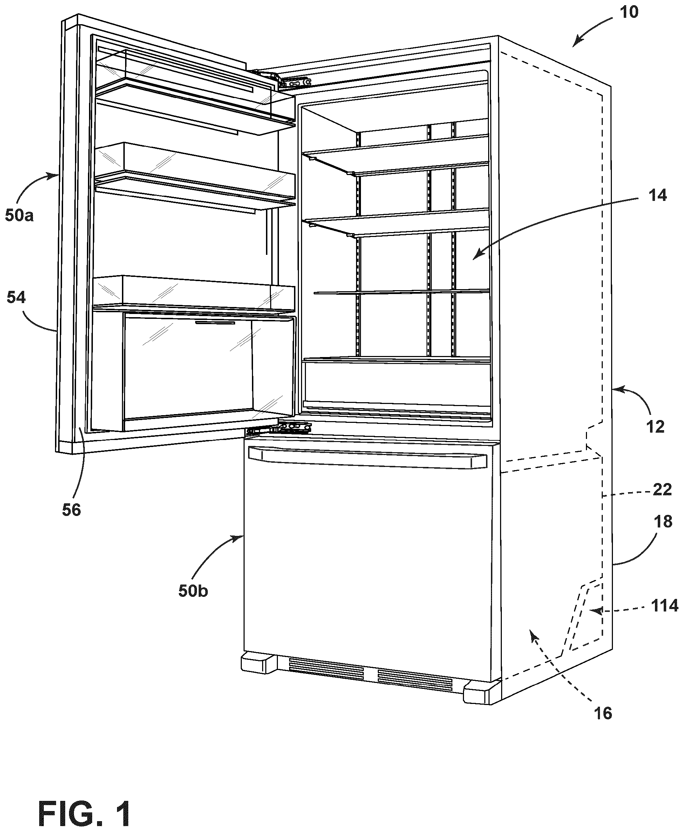

For purposes of description herein, the terms "upper," "lower," "right," "left," "rear," "front," "vertical," "horizontal," and derivatives thereof shall relate to the disclosure as oriented in FIG. 1. Unless stated otherwise, the term "front" shall refer to the surface of the element closer to an intended viewer, and the term "rear" shall refer to the surface of the element further from the intended viewer. However, it is to be understood that the disclosure may assume various alternative orientations, except where expressly specified to the contrary. It is also to be understood that the specific devices and processes illustrated in the attached drawings, and described in the following specification are simply exemplary embodiments of the inventive concepts defined in the appended claims. Hence, specific dimensions and other physical characteristics relating to the embodiments disclosed herein are not to be considered as limiting, unless the claims expressly state otherwise.

The terms "including," "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element preceded by "comprises a ... " does not, without more constraints, preclude the existence of additional identical elements in the process, method, article, or apparatus that comprises the element.

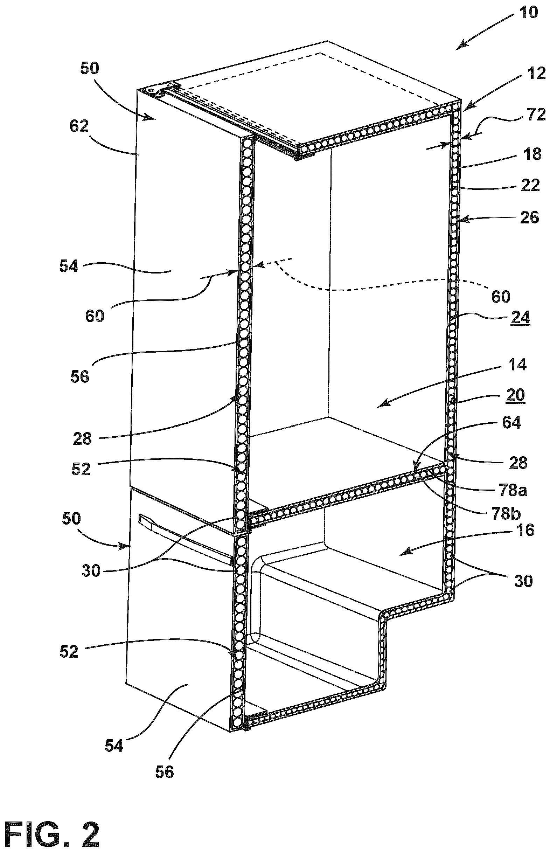

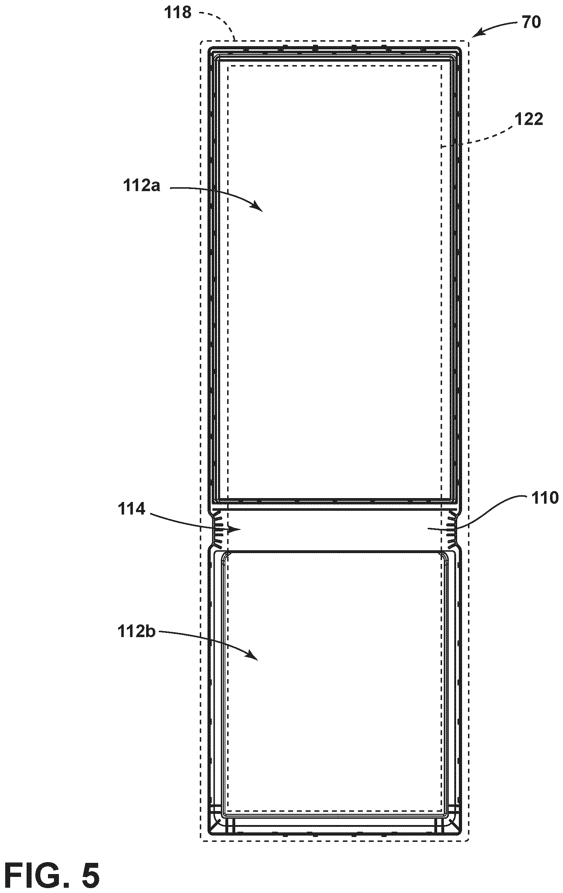

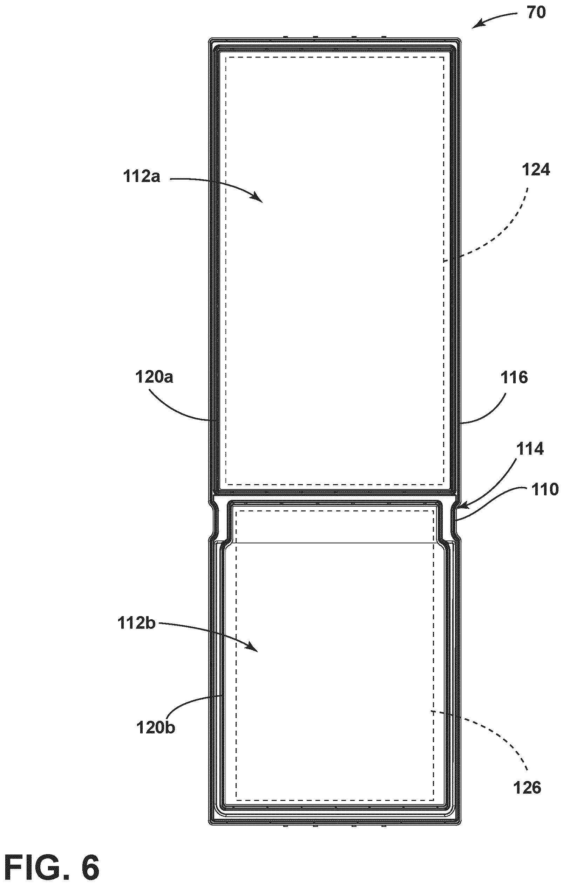

Referring to FIGS. 1-12, reference numeral 10 generally designates a vacuum insulated structure including a cabinet 12 defining at least one compartment, often including a refrigerator compartment 14 and a freezer compartment 16. The cabinet 12 includes an outer wrapper 18 having an inner surface 20 and a liner assembly 22, including at least one liner 22, which often includes a refrigerator liner 22a and a freezer liner 22b, having an inner surface 24. The liner assembly 22 is coupled to the outer wrapper 18 and defines an insulation cavity 26 therebetween. An at least partial vacuum 28 is defined within the insulation cavity 26 biasing the outer wrapper 18 and the liner assembly 22 towards the insulation cavity 26. A plurality of supports 30, which may include a first plurality of supports 30a, a second plurality of supports 30b, and a third plurality of supports 30c, having a substantially spherical structure 32 are disposed in the insulation cavity 26. A hollow internal volume 34 of each support 30 is in fluid communication with the insulation cavity 26 through a plurality of apertures 36, which may include a first aperture 36 and a second aperture 36, defined by each support 30. The supports 30 are configured to support the outer wrapper 18 and the liner assembly 22.

Referring still to FIGS. 1-4, the vacuum insulated appliance 10 is illustrated as a refrigeration appliance. The refrigeration appliance 10 is illustrated as a bottom-mount refrigerator having an upper compartment configured as the refrigerator compartment 14 and a lower compartment configured as the freezer compartment 16.

The cabinet 12 of the illustrated refrigeration appliance 10 includes a first insulated door 50a and a second insulated door 50b. The first insulated door 50a and the second insulated door 50b, which can collectively be referred to as insulated doors 50, can have substantially similar configurations, as discussed further herein. In this way, the refrigerator and freezer compartments 14, 16 defined by the cabinet 12 can be sealed with the insulated doors 50a, 50b, respectively. Moreover, in various configurations, the appliance 10 may include the cabinet 12 defining at least a first compartment and a second compartment sealed with insulated doors 50. The appliance 10 may be, for example, a bottom-mount French door refrigerator, a top-mount refrigerator, a side-by-side refrigerator, a 4-door French door refrigerator, and/or a 5-door French door refrigerator. Further, the present disclosure is not limited to refrigerators. The appliance 10 may be, for example, freezers, coolers, vacuum insulated structures, and other similar appliances and fixtures within household and commercial settings. Further, it is contemplated that the vacuum insulated appliance 10 disclosed herein may be for a variety of appliances, structures, panels, or assemblies for insulation purposes other than with an appliance.

The cabinet 12 of the appliance 10 is an insulated structure having the insulation cavity 26 defined between the outer wrapper 18 and the liner assembly 22. The outer wrapper 18 and the liner assembly 22 may collectively be referred to as a structural wrapper that defines the insulation cavity 26. Similarly, the insulated doors 50 are insulated structures each having an insulation cavity 52 defined between a door wrapper 54 coupled to a door liner 56. The insulation cavity 26 may include the supports 30 disposed therein to support the structural wrapper of the cabinet 12, as discussed herein. The insulation cavity 52 of the doors 50 may include the supports 30 to support the door wrapper 54 and door liner 56 in a similar manner discussed with reference to the cabinet 12. The cabinet 12 and the insulated doors 50 each define an evacuation port for applying the partial vacuum or negative pressure 28 to the insulation cavities 26, 52.

Referring still to FIGS. 1-4, the at least partial vacuum 28 is defined within the insulation cavities 26, 52, forming the cabinet 12 and the doors 50 as vacuum insulated structures. The at least partial vacuum 28 defines a pressure differential 60 between an exterior 62 of the cabinet 12 and the insulation cavity 26. The pressure differential 60 serves to define an inward compressive force that is exerted on both the outer wrapper 18 and the liner assembly 22 and tends to bias the outer wrapper 18 and the liner assembly 22 toward the insulation cavity 26. The pressure differential 60 and the inward compressive force are also exerted on both the door wrappers 54 and the door liners 56 of the insulated doors 50 and tend to bias the door wrappers 54 and the door liners 56 towards the insulation cavities 52, respectively, in a similar manner.

The outer wrapper 18, the door wrapper 54, the liner assembly 22, and the door liner 56 are made from a material at least partially resistant to bending, deformation, or otherwise being deformed in response to the inward compressive force. These materials for the outer wrapper 18, the door wrapper 54, the liner assembly 22, and the door liner 56 include, but are not limited to, metals, polymers, metal alloys, combinations thereof, and/or other similar substantially rigid materials that can be used for vacuum insulated appliances and structures.

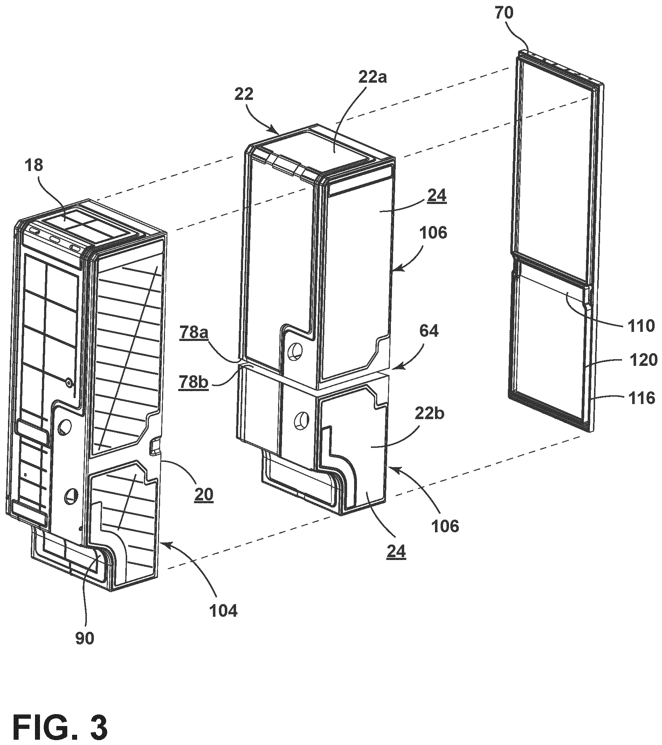

Referring to FIG. 3, the liner assembly 22 may include the refrigerator liner 22a to define the refrigerator compartment 14 and the freezer liner 22b to define the freezer compartment 16. The refrigerator liner 22a and the freezer liner 22b may be separate components defining a mullion gap 64 in the insulation cavity 26 therebetween, when coupled together using a trim breaker assembly 70. The mullion gap 64 may be filled with the supports 30 and be placed under the at least partial vacuum 28. The refrigerator liner 22a and the freezer liner 22b may be biased toward the mullion gap 64 in the insulation cavity 26, in a similar manner to that discussed with reference to the outer wrapper 18 and the liner assembly 22 generally.

In various implementations, the refrigerator liner 22a and the freezer liner 22b may be coupled together in the mullion gap 64 separate from the trim breaker assembly 70. The refrigerator liner 22a and the freezer liner 22b may still define the mullion gap 64 when coupled together. While the liner assembly 22 is shown as having two separate liners 22a, 22b, the liner assembly 22 may be a single portion or structure defining the refrigerator and freezer compartments 14, 16. The liner assembly 22 may also be a single structure defining the refrigerator compartment 14 or the freezer compartment 16. The liner assembly 22 can generally have a similar shape as the outer wrapper 18 to fit within the outer wrapper 18 and form the cabinet 12.

The outer wrapper 18 and the liner assembly 22 are generally spaced apart from one another to define the insulation cavity 26. The insulation cavity 26 has a thickness 72 defined by a distance between the inner surface 20 of the outer wrapper 18 and the inner surface 24 of the liner assembly 22. In some implementations, the thickness 72 of the insulation cavity 26 is substantially consistent between the inner surface 20 of the outer wrapper 18 and the inner surface 24 of the liner assembly 22. In other implementations, the thickness 72 of the insulation cavity 26 may be varied. For example, the thickness 72 of the insulation cavity 26 proximate the freezer compartment 16 may be greater than the thickness 72 of the insulation cavity 26 proximate in the refrigerator compartment 14.

In implementation where the liner assembly 22 includes the refrigerator liner 22a and the freezer liner 22b that define the mullion gap 64, the thickness 72 of the insulation cavity 26 is defined between an inner surface 78a of the refrigerator liner 22a and an inner surface 78b of the freezer liner 22b. The thickness 72 of the insulation cavity 26 in the mullion gap 64 may be substantially similar to the thickness 72 between the outer wrapper 18 and the liner assembly 22. However, the thickness 72 of the insulation cavity 26 in the mullion gap 64 may also be different from the thickness 72 of the insulation cavity elsewhere. The thickness 72 of the insulation cavity 26 in the mullion gap 64 may be substantially similar throughout the mullion gap 64 but may also be varied.

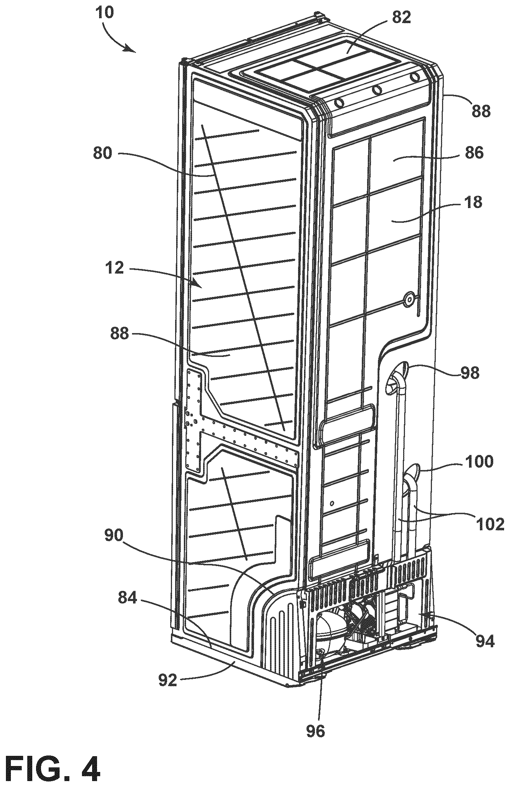

Referring still to FIG. 3, as well as FIG. 4, the outer wrapper 18 has a plurality of walls 80, which may include a top wall 82, a bottom wall 84, a rear wall 86, a pair of side walls 88, and a curved wall 90. The bottom wall 84 of the outer wrapper 18 may be coupled to a base 92. The curved wall 90 of the outer wrapper 18 and the base 92 at least partially define a mechanical compartment 94. Various appliance components 96 can be positioned on the base 92 within the mechanical compartment 94 below the rear wall 86 and proximate to the curved wall 90 of the outer wrapper 18. The appliance components 96 positioned within the mechanical compartment 94 may include components of a refrigerant system, which may include a compressor, a condenser, and/or portions of an evaporator assembly. The appliance components 96 may also include a controller, electronics, or other components for operation of the appliance 10.

The outer wrapper 18 and the liner assembly 22 may define a first passthrough 98 and a second passthrough 100 to provide a passage for service connections 102. The outer wrapper 18 and the liner assembly 22 each define apertures that align with one another to form the first and second passthroughs 98, 100. The service connections 102 may be electrical, fluid, refrigerant system, and/or other appliance connections between the refrigerator and freezer compartments 14, 16 and an outside of the cabinet 12. For example, the service connections 102 may include a suction tube, a drain tube, and a wiring harness.

Referring still to FIG. 3, as well as FIGS. 5 and 6, the trim breaker assembly 70 generally couples the outer wrapper 18 to the liner assembly 22 to form the cabinet 12. It is contemplated that the trim breaker assembly 70 may be coupled to an outer edge 104 of the outer wrapper 18 and/or an outer edge 106 of the liner assembly 22. The trim breaker assembly 70 has a generally rectangular shape, however, it is contemplated that other geometric shapes known in the art may be used. In this way, the trim breaker assembly 70 may not substantially interfere with access to the refrigerator and freezer compartments 14, 16 defined by the cabinet 12.

The trim breaker assembly 70 may include a cross member 110 to define apertures 112a, 112b corresponding to the refrigerator and freezer compartments 14, 16 of the appliance 10, respectively. The cross member 110 defines a mullion region 114 between the refrigerator and freezer compartments 14, 16. The trim breaker assembly 70 may define a wrapper channel 116 extending along an outer perimeter 118 of the trim breaker assembly 70 to receive the outer edge 104 of the outer wrapper 18. The trim breaker assembly 70 may also define a liner channel 120, which may include liner channels 120a, 120b, to receive the outer edge 106 of the liner assembly 22.

In some implementations, the liner channel 120 extends along an inner perimeter 122 of the trim breaker assembly 70 to receive the liner assembly 22. In other implementations, the liner channel 120a may extend along a perimeter 124 of the aperture 112a corresponding to the refrigerator compartment 14 to accommodate the outer edge 106 of the refrigerator liner 22a. The liner channel 120b may extend along a perimeter 126 of the aperture 112b corresponding to the freezer compartment 16 to accommodate the outer edge 106 of the freezer liner 22b. It is contemplated that the trim breaker assembly 70 may define a single combined channel that extends along the outer perimeter 118 to accommodate both the outer wrapper 18 and the liner assembly 22 therein. The channels 116, 120 may be filled with an adhesive, such as, for example, an epoxy. The adhesive is configured to couple the outer wrapper 18 and/or the liner assembly 22 with the trim breaker 70 and seal the insulation cavity 26.

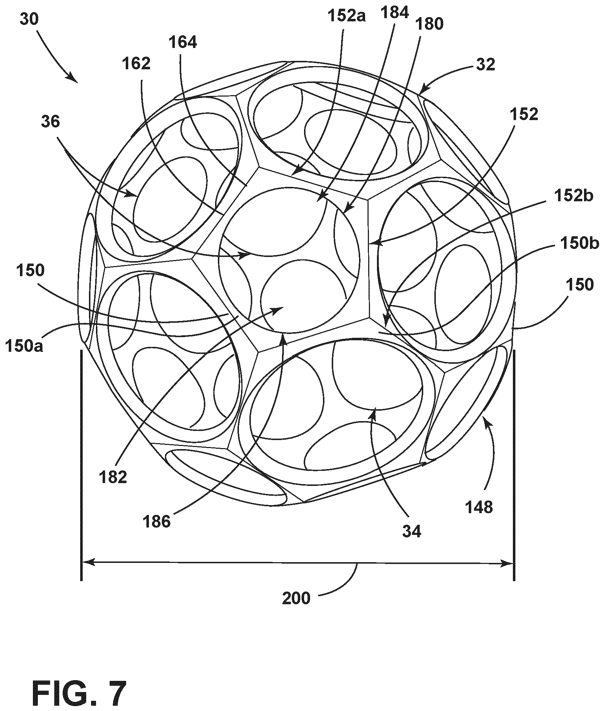

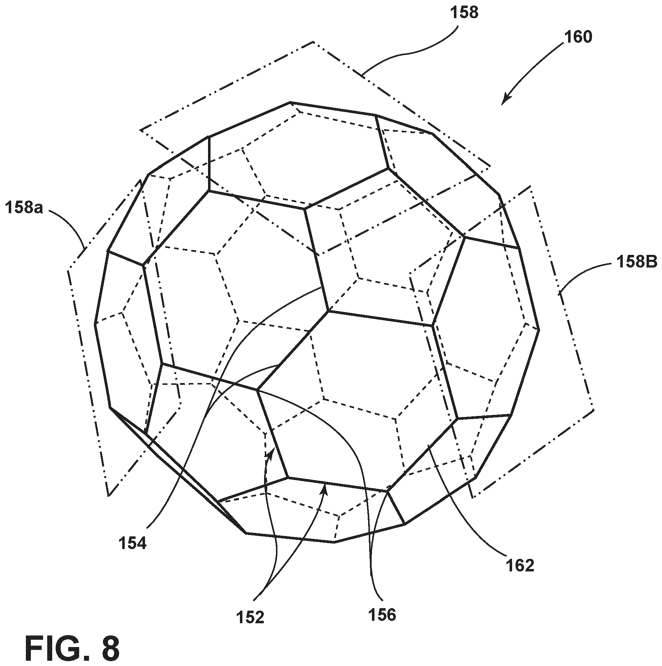

Referring to FIGS. 7 and 8, the supports 30 have the substantially spherical structure 32 and are configured to support the outer wrapper 18 and the liner assembly 22. The supports 30 disposed in the insulation cavity 26 generally resist or act against the biasing of the outer wrapper 18 and the liner assembly 22 caused by the pressure differential 60 between the insulation cavity 26 and exterior 62 of the cabinet 12. Each of the supports 30 has a structural frame 148 defining the substantially spherical structure 32. The supports 30 each include a plurality of support faces 150, which may include a first plurality of support faces 150a and a second plurality of support faces 150b and/or a first through fourth support faces 150c-f, defined on the structural frame 148. The support faces 150 each have one of a plurality of polygonal perimeters 152, which may include a first polygonal perimeter 152a and a second polygonal perimeter 152b, or one of at least one polygonal perimeter 152. The plurality of support faces 150 having the polygonal perimeter 152 may also be referred to as a plurality of polygonal faces.

The polygonal perimeter 152 generally includes a plurality of sides 154 each intersecting at a plurality of vertices 156. The sides 154 and the vertices 156 of the polygonal perimeter 152 for each of the support faces 150 are planar. Stated differently, each of a plurality of planes 158, which may include a first plane 158a and a second plane 158b, contains the sides 154 and the vertices 156 of the polygonal perimeter 152 of a corresponding support faces 150. For example, the first plane 158a contains the sides 154 and the vertices 156 of the polygonal perimeter 152 of the first support face 150c and the second plane 158b contains the sides 154 and the vertices 156 of the polygonal perimeter 152 of the second support face 150d.

The sides 154 of the polygonal perimeters 152 of each of the support faces 150 align with sides 154 of the polygonal perimeter 152 of adjacent support faces 150 to form a polyhedron 160. The aligned sides 154 of the polygonal perimeters 152 may also be referred to as edges 162 of the polyhedron. Each of the support faces 150 are adjacent to the same number of support faces 150 as number of sides 154 of the polygonal perimeter 152 of the support face 150. In some implementations, the polygonal perimeter 152 of each of the support faces 150 are the same to form the polyhedron 160 and each support face 150 is adjacent to the same number of support faces 150 as all other support faces 150 of the support 30.

In other implementations, the support 30 may include support faces 150 having varied polygonal perimeters 152. For example, the first plurality of support faces 150a may have the first polygonal perimeter 152a and the second plurality of support faces 150b have the second polygonal perimeter 152b. The first polygonal perimeter 152a may be a pentagon and the second polygonal perimeter 152b may be a hexagon. The first and second polygonal perimeters 152a, 152b form the polyhedron 160, which may be a truncated icosahedron. The first and second polygonal perimeters 152a, 152b are not limited to a pentagon and a hexagon and may be a variety of polygons that form the polyhedron 160. For example, the polyhedron 160 may also be a truncated icosahedron having other polygons as the first and second polygonal perimeters 152a, 152b or have one polygonal perimeter 152. The support 30 are also not limited to having support faces 150 having two different polygonal perimeters 152 and may include support faces 150 having more than two different polygonal perimeters 152 that form the polyhedron 160. The polyhedron 160 is not limited to the truncated icosahedron and may be a variety of polyhedrons 160 having the substantially spherical structure 32 including an icosahedron.

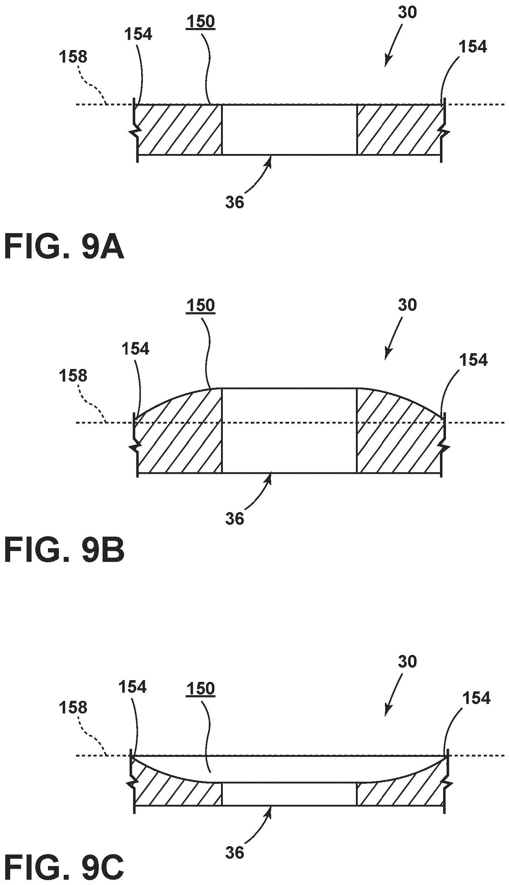

Referring still to FIGS. 7 and 8, and now also FIGS. 9A-9C, the structural frame 148 extends along the polygonal perimeters 152 of each of the support faces 150 to define the substantially spherical structure 32 of the support 30. Stated differently, the substantially spherical structure 32 of the supports 30 is defined by the plurality of support faces 150 having the polygonal perimeter 152. The support faces 150 defined by the structural frame 148 may align with the planes 158 of the polygonal perimeter 152 for each of the support faces 150. In such implementations, the structural frame 148 and the support faces 150 generally aligns with the polyhedron 160 formed by the polygonal perimeter 152, as shown in FIG. 9A.

However, the structural frame 148 and the support faces 150 are not limited to being aligned with the polyhedron 160. The support faces 150 may extend beyond the planes 158 of the polygonal perimeters 152 (i.e., the support faces are outside the polyhedron 160). For example, the support face 150 may be concave relative to the plane 158 of the polygonal perimeter 152, as shown in FIG. 9B. The support faces 150 may also recessed to the planes 158 of the polygonal perimeters 152 (i.e., the support faces are within the polyhedron 160). For example, the support face 150 may be convex relative to the plane 158 of the polygonal perimeter 152, as shown in FIG. 9C.

The supports 30 are considered a substantially spherical structure 34 when a volume of the polyhedron 160 is greater than or equal to about 75% of a volume of a circumscribed sphere on the polyhedron 160. In other implementations, the supports 30 are considered a substantially spherical structure 34 when a volume of the polyhedron 160 is greater than or equal to about 80%, about 83%, about 85%, about 87%, about 90%, or about 93% about 95% of a volume of a circumscribed sphere on the polyhedron 160. Additionally or alternatively, the supports 30 are considered a substantially spherical 34 when a volume of and within the support frame 148 of the support 30 is greater than or equal to about 75% of a volume of a circumscribed sphere on the polyhedron 160. In various other implementation, the supports 30 are considered a substantially spherical 34 when a volume of and within the support frame 148 of the support 30 is greater than or equal to about 80%, about 83%, about 85%, about 87%, about 90%, about 93%, or about 95% of a volume of a circumscribed sphere on the polyhedron 160. A circumscribed sphere is the smallest radiused sphere that intersects each of the vertices 156 of the polyhedron 160.

The support 30 may have any combination of the support faces 150 being planar with, extending beyond, or recessed to the planes 158 defined by the polygonal perimeters 152 of each support face 150. In implementations where the support faces 150 are either all planar with or all recessed to the planes 158 defined by the polygonal perimeters 152 of each support face 150, the edges 162 of the polyhedron 160 generally align with apexes 164 of the structural frame 148. In implementations where the support faces 150 all extend beyond the plane 158 defined by the polygonal perimeters 152 of each support face 150, the edges 162 of the polyhedron 160 generally align with valleys of the structural frame 148.

In implementation where the support faces 150 are a combination of being planar with, extending beyond, or recessed to the planes 158 defined by the polygonal perimeters 152 of each support face 150, the edges 162 may align with an apex, a valley, or an inflection of the structural frame 148. The edges 162 align with an apex when both of the adjoining support faces 150 are either both planar with or both recessed to the planes 158 defined by the polygonal perimeters 152 of the adjoining support faces 150. The edges 162 align with a valley when both of the adjoining support faces 150 extend beyond the planes 158 defined by the polygonal perimeters 152 of the adjoining support faces 150. The edges 162 align with an inflection between the adjoining support faces 150, when the adjoining support faces 150 each have a different structure relative to the planes 158 defined by the polygonal perimeters 152 of the adjoining support faces 150 (e.g., one support face 150 extends beyond the plane 158 and the other support face is planar with the plane 158).

Referring to FIG. 7, the structural frame 148 defines the hollow internal volume 34 within the support 30. The supports 30 define the plurality of apertures 36, each in fluid communication with the hollow internal volume 34 of the support 30. The apertures 36 extend through the structural frame 148 so that the hollow internal volume 34 is in fluid communication with the insulation cavity 26 of the cabinet 12 when disposed therein. The apertures 36 allow for the partial vacuum 28 to be placed on the hollow internal volume 34 of the supports 30.

The apertures 36 may be defined on a single face of the support faces 150 or may be defined on multiple faces of the support faces 150. In various implementations, each support face 150 may define a corresponding aperture 36. For example, the first aperture 36 may be defined by the first support face 150c and the second aperture 36 may be defined by the second support face 150d. In other implementations, each of first plurality of support faces 150a may define a corresponding apertures 36 while the second plurality of the support faces 150b does not define apertures 36. Multiple apertures 36 may also be defined in each of the support faces 150.

Each of the apertures 36 each have at least one aperture perimeter 180 that define the aperture 36 in the support face. The aperture perimeter 180 of each of the aperture 36 may be the same on each of the support faces 150. However, the aperture perimeter 180 of each of the apertures may also be varied or different for each of the support faces 150 or different between the first plurality of support faces 150a and the second plurality of support faces 150b. In some implementations, the aperture perimeter 180 of the apertures 36 may have a similar or the same shape as the polygonal perimeter 152 of the support face 150. Stated differently, the aperture perimeter 180 of each of the apertures 36 may extend substantially parallel to the polygonal perimeter 152 of the support face 150 the aperture 36 is defined on. In other implementations, the aperture perimeter 180 of the apertures 36 may be circular, polygonal, or other shape configured to define the aperture and allow for fluid communication between the hollow internal volume 34 of the support 30 and the insulation cavity 26. As illustrated in FIG. 7, each of the support faces 150 defines a corresponding aperture 36 with a circular aperture perimeter 180.

Each of the support faces 150 have an area 182 defined within the polygonal perimeter 152. The apertures 36 defined by the support face 150 have an area 184 defined within the perimeter 180 of the apertures 36. The area 184 of the aperture 36 may be greater than or equal to about 40%, greater than or equal to about 50%, greater than or equal to about 60%, greater than or equal to about 70%, greater than or equal to about 80%, greater than or equal to about 90% of the area of the corresponding support face 150.

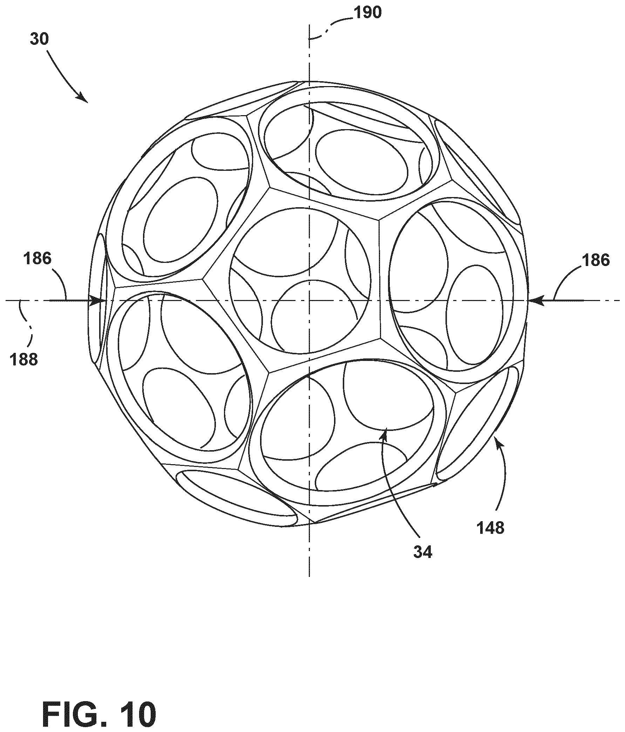

Referring to FIG. 7, and now also FIGS. 10-11D, the supports 30 are made from a material resistant or substantially resistant to bending, deformation, or otherwise being deformed in response to an inward compressive force 186 toward the hollow internal volume 34. The material may allow for displacement of the structural frame 148 toward the hollow internal volume 34 along an axis 188 that is parallel with the compressive force and displacement away from the hollow internal volume 34 along an axis 190 that is substantially perpendicular to the compressive force 186. These materials may also have low heat transfer coefficient, thus difficult for heat to travel along the supports 30. These materials for the supports 30 include, but are not limited to, metals, polymers, metal alloys, combinations thereof, and/or other similar substantially rigid materials that can be used for vacuum insulated appliances and structures.

The supports 30 each generally engage a combination of the inner surface 20 of the outer wrapper 18, the inner surface 24 of liner assembly 22, and adjacent supports 30 to act against the pressure differential 60 between the exterior 62 of the cabinet 12 and the insulation cavity 26. The pressure differential 60 acts as the inward compressive force 186 toward the hollow internal volume 34 of the supports 30. The supports 30 may compress or flex along the axis 188 parallel to the compressive force 186, thus causing the supports to bow and flex away from the internal volume 34 along the axis 190 perpendicular to the compressive force 186. By arranging the supports adjacent to other supports 30, the supports 30 may prevent or at least partially prevent the flexing away from the internal volume 34 of the adjacent support 30. By at least partially preventing the flexing along the axis 190 away from the internal volume 34, the compressing along the axis 188 toward the internal volume 34 may also be prevented or at least partially prevented from occurring.

The supports 30 having the substantially spherical structure 32 generally have a diameter 200. The diameter 200 is measured from a point on the first support face 150c to a point the second support face 150d on an opposing side of the polyhedron 160 of the first support face 150c. In various implementations, the diameter 200 of the supports 30 may be about equal, less than or equal to about half, less than or equal to about a third, less than or equal to about a quarter, less than or equal to about a sixth, or less than or equal to about a tenth of the thickness 72 of the insulation cavity 26. In other implementations, the diameter 200 of the supports 30 may be about 7.0 inches, about 6.0 inches, about 5.0 inches, about 4.0 inches, about 3.0 inches, about 2.0 inches, about 1.0 inches, about 0.75 inches, about 0.5 inches, about 0.25 inches, about 0.125 inches, within any range bound by any two of those values (e.g., from 1.0 inches to 7.0 inches, from 0.125 inches to 2.0 inches, from 3.0 inches to 5.0 inches, etc.).

The supports 30 may be placed or aligned within the insulation cavity 26 or may be randomly disposed within the insulation cavity 26. By aligning the supports within the insulation cavity 26, the support faces 150 can be configured to engage particular support faces of adjacent supports 30, the inner surface 20 of the outer wrapper 18, and/or the inner surface 24 of the liner assembly 22. The supports 30 may be arranged in patterns forming rows and/or columns of supports 30 within the insulation cavity 26. The supports 30 may be also offset in patterns when placed or aligned within the insulation cavity 26.

The supports 30 may also be randomly disposed in the insulation cavity 26. In some implementations, the diameter 200 of the supports 30 may be small enough to be disposed in the insulation cavity 26 by dumping or inserting the supports 30 through a load port defined on the cabinet 12. The supports 30 would generally have no particular controlled alignment within the insulation cavity when disposed in this manner. The insulation cavity 26 may be completely filled or substantially filled with the supports 30 to create a substantially continuous layer of the supports 30 in the insulation cavity 26. The cabinet 12 may be vibrated while disposing the supports 30 in this manner to assist in the supports 30 settling and engaging adjacent supports 30, the inner surface 20 of the outer wrapper 18, and/or the inner surface 24 of the liner assembly 22. The supports 30 may also be randomly placed in the insulation cavity 26 before the trim breaker assembly 70 is coupled to the outer wrapper 18 and the liner assembly 22.

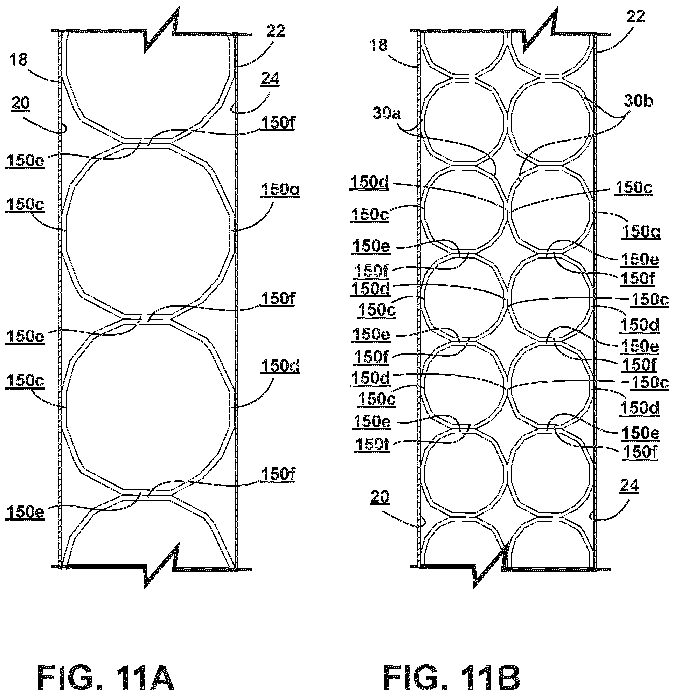

As illustrated in FIG. 11A, the diameter 200 of the supports 30 are about equal to the thickness 72 of the insulation cavity 26. The first support faces 150c of the supports 30 engage the inner surface 20 of the outer wrapper 18 and the second support faces 150d of the supports 30 engage the inner surface 24 of the liner assembly 22. The third and fourth support faces 150e, 150f of the supports 30 generally engage the third and fourth support faces 150e, 150f of the adjacent supports 30 but may engage the inner surface 20 of the outer wrapper 18 if positioned in a corner of the cabinet 12.

As illustrated in FIG. 11B, the diameter 200 of the supports 30 are about equal to half the thickness 72 of the insulation cavity 26. The first support faces 150c of the first plurality of supports 30a engage the inner surface 20 of the outer wrapper 18 and the second support faces 150d engage the first support face 150c of an adjacent support 30 of the second plurality of supports 30b. The second support faces 150d of the second plurality of supports 30b engage the inner surface 24 of the liner assembly 22. The third and fourth support faces 150e, 150f of both first and second plurality of the supports 30a, 30b generally engage the third and fourth support faces 150e, 150f of the adjacent supports 30 of the same plurality of supports 30a, 30b. However, the third and fourth support faces 150e, 150f of the first plurality of supports 30a may engage the inner surface 20 of the outer wrapper 18 if positioned in a corner of the cabinet 12. The third and fourth support faces 150e, 150f of the second plurality of supports 30b may engage the third or fourth support faces 150e, 150f of the first plurality of supports 30a if positioned in a corner of the cabinet 12.

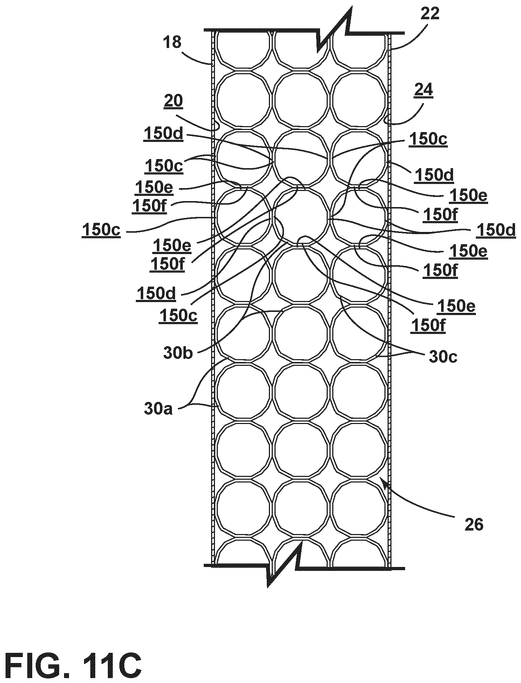

As illustrated in FIG. 11C, the diameter 200 of the supports 30 are about equal to a third the thickness 72 of the insulation cavity 26. The first support faces 150c of the first plurality of supports 30a engage the inner surface 20 of the outer wrapper 18 and the second support faces 150d engage the first support face 150c of an adjacent support 30 of the second plurality of supports 30b. The second support faces 150d of the second plurality of supports 30b engage the first support face 150c of an adjacent support 30 of the third plurality of supports 30c. The second support faces 150d of the third plurality of supports 30c engage the inner surface 24 of the liner assembly 22. The third and fourth support faces 150e, 150f of first, second and third plurality of the supports 30a, 30b, 30c generally engage the third and fourth support faces 150e, 150f of the adjacent supports 30 of the same plurality of supports 30a, 30b, 30c. However, the third and fourth support faces 150e, 150f of the first plurality of supports 30a may engage the inner surface 20 of the outer wrapper 18 if positioned in a corner of the cabinet 12. The third and fourth support faces 150e, 150f of the second and third plurality of supports 30b, 30c may engage the third or fourth support faces 150e, 150f of the first or second plurality of supports 30a, 30b if positioned in a corner of the cabinet 12.

While the supports 30 having the diameter 200 a third of the thickness 72 of the insulation cavity 26 are illustrated as aligned and form a grid or structure, the supports 30 are not limited to such and may be randomly distributed or aligned in a different manner. In implementations where the supports 30 are randomly distributed, the support faces 150 may engage adjacent surfaces including the inner surfaces 20, 24 of the outer wrapper 18 and the liner assembly 22, and/or one or more support faces 150 of adjacent supports 30. The supports 30 may also be aligned such that alternating rows of the supports 30 engage the inner surfaces 20, 24 of the outer wrapper 18.

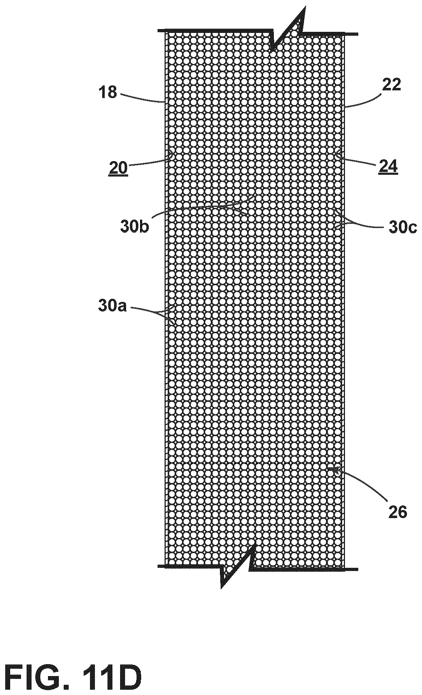

As illustrated in FIG. 11D, the diameter 200 of the supports 30 are less than or equal to about a tenth of the thickness 72 of the insulation cavity 26. The first plurality of supports 30a and the third plurality of supports 30c generally engage either the inner surfaces 20, 24 of the outer wrapper 18 and/or the liner assembly 22, while the second plurality of supports 30b engage adjacent supports 30 from the first, second and/or third plurality of supports 30a, 30b, 30c. Each of the supports 30a, 30b 30c may have more than four support faces 150 engage adjacent surfaces. The supports 30 may be evenly or consistently aligned and distributed throughout the insulation cavity 26 but may also be randomly placed or distributed therethrough.

Referring still to FIGS. 7 and 11-12D, and now also FIGS 9A-9C, the supports 30 may include support faces 150 that are configured to be received or receive a support face 150 of an adjacent support face 150. In this way, the supports 30 interlock with the adjacent supports 30 to form an interlocking support network within the insulation cavity 26. The interlocking support network may prevent shifting of the supports 30 due to the inward compressive force 186 or other movement of the cabinet 12. For example, the third support face 150e of the supports 30 may extend beyond the plane 158 defined by the polygonal perimeter 152 of the third support face 150e and the fourth support face 150f of the supports 30 may be recessed to the plane 158 defined by the polygonal perimeter 152 of the fourth support face 150f. The third support face 150e of the supports 30 may be received within the recessed fourth support face 150f on an adjacent support 30. The supports 30 may include multiple recessed and extended faces opposing each other to form the interlocking supports 30. The inner surfaces 20, 24 of the outer wrapper 18 and/or the liner assembly 22 may also include raised or recessed surfaces to engage supports 30 having corresponding raised or recessed support surfaces 150.

Referring to FIGS. 7 and 11-12D, the cabinet 12 may include supports 30 have a variety of diameters 200 disposed within the insulation cavity 26. For example, the cabinet 12 may include the first plurality of supports 30a having a first diameter 200 disposed in the mullion gap 64 between the refrigerator liner 22a and the freezer liner 22b and the second plurality of supports 30b having a second diameter 200 disposed in the remainder of the insulation cavity 26 between the outer wrapper 18 and the liner assembly 22. In another example, the cabinet 12 may include the first plurality of supports 30a having a first diameter 200 and the second plurality of supports 30b having a second diameter 200 disposed in the insulation cavity forming alternating rows of the first and second plurality of supports 30a, 30b. In yet another example, the cabinet 12 may include the first plurality of supports 30a having a first diameter 200 and the second plurality of supports 30b having a second diameter 200 randomly distributed within the insulation cavity 26. The variety of diameters 200 is not limited to these examples and may include three or more plurality of supports 30 each having a variety of diameters 200 either aligned or randomly distributed within the insulation cavity 26.

The insulation cavity 26 of the cabinet 12 may include one or more insulation materials, in addition to the supports 30, disposed therein. It is generally contemplated that the insulation materials may be glass-type materials, carbon-based powders, silicon oxide-based materials, silica-based materials, insulating gasses, and other standard insulation materials known in the art. The insulation materials may substantially fill the insulation cavity 26 around the supports 30, forming a substantially continuous layer between the outer wrapper 18 and the liner assembly 22. The insulation materials may be smaller than the apertures 36 defined on the supports 30 to at least partially fill the hollow internal volume 34. The insulation cavity 26 may be filled with the insulation materials using a load port on the cabinet 12 after the disposing the supports 30 are disposed therein. The insulation materials may provide additional insulation properties for the appliance 10 when combined with the supports 30. For example, an insulation material that has better insulation properties when uncompressed may be used in the cabinet 12 with the supports 30. The supports 30 will prevent or at least partially prevent insulation material under the at least partial vacuum 28 from compressing.

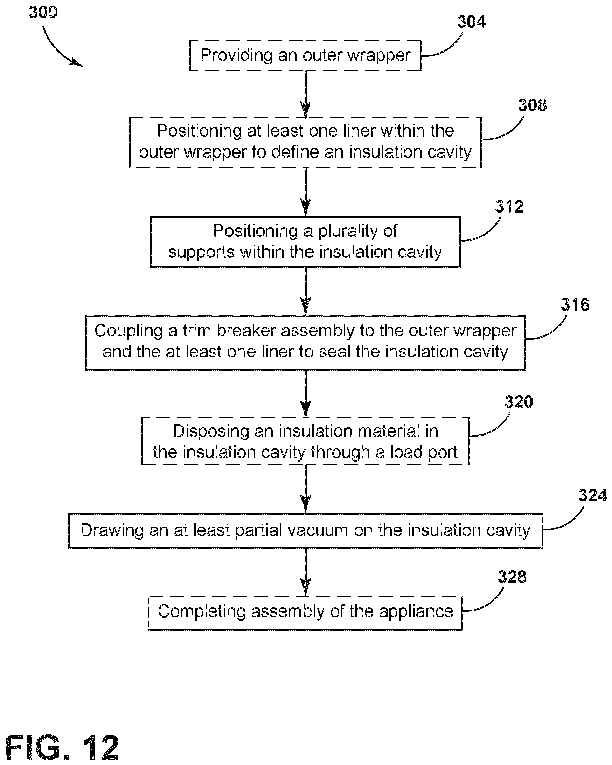

Referring to FIG. 12, with further reference to FIGS. 1-11D, a flow diagram of a method 300 for manufacturing the vacuum insulated structure 10 is illustrated. The method 300 includes step 304 of providing the outer wrapper 18. A structural wrapper that includes the outer wrapper 18 and the liner assembly 22 defining the insulation cavity 26 may be provided. At step 308, at least one liner 22 or the liner assembly 22 is positioned within the outer wrapper 18 to define the insulation cavity 26 therebetween. The at least one liner 22 or the liner assembly 22 defines at least one compartment, which may be the refrigerator compartment 14 and/or the freezer compartment 16. The refrigerator liner 22a may be positioned within the outer wrapper 18 to define the insulation cavity 26 therebetween. The freezer liner 22b may be positioned within the outer wrapper 18 to define the insulation cavity 26 therebetween, and define the mullion gap 64 in the insulation cavity 26 between the refrigerator liner 22a and the freezer liner 22b.

At step 312, the plurality of supports 30 may be positioned or disposed within the insulation cavity 26. Each of the supports 30 define the internal volume 34 and include apertures 36 in fluid communication with the internal volume 34. The first support face 150c of each support 30 of the plurality of supports 30 may be positioned to engage the inner surface 20 of the outer wrapper 18. The second support face 150d of each support 30 of the plurality supports 30 may be positioned to engage the inner surface 24 of the at least one liner 22. The supports 30 may include multiple pluralities of supports 30, which may include the first plurality of supports 30a and the second plurality of supports 30b. The first support face 150c of each support 30 of the first plurality of supports 30a may be positioned to engage the inner surface 20 of the outer wrapper 18. The first support face 150c of each support 30 of the second plurality of supports 30b may be positioned to engage the second support face 150d of the first plurality of supports 30a. The second support face 150d of each support of the second plurality supports to engage the inner surface 24 of the at least one liner 22.

The support 30 may also be disposed randomly within the insulation cavity using a load port define on the cabinet 12 formed by the structural wrapper having the outer wrapper 18 and the liner assembly 22. This may include vibrating the structural wrapper to allow for the supports 30 to settle and fill the insulation cavity 26.

At step 316, the trim breaker assembly 70 may be coupled to the outer wrapper and the at least one liner 22 to at least partially seal the insulation cavity 26. The outer edge 104 of the outer wrapper 18 may disposed in the wrapper channel 116 defined by the trim breaker assembly 70 and coupled to the trim breaker assembly 70 using an adhesive. The outer edge 106 of the at least one liner 22 may disposed in the liner channel 120 defined by the trim breaker assembly 70 and coupled to the trim breaker assembly 70 using an adhesive.

In step 320, the insulation material may be disposed within the insulation cavity 26 through a load port defined by the cabinet 12. The cabinet 12 may be vibrated to allow the insulation to fill the hollow internal volumes 34 through the apertures 36 of the supports 30 and surround the supports 30. The insulation material may form a substantially continuous layer within the insulation cavity 26.

In step 324, the at least partial vacuum 28 may be or is drawn in the insulation cavity 26 defined by the outer wrapper 18 and the liner assembly 22 coupled together with the trim breaker assembly 70. Step 328 may also include coupling the doors 50 to the cabinet 12, adding the refrigeration system, and otherwise completing assembly of the appliance 10. The steps of the method 300 may be performed in any order, simultaneously, concurrently, repeated, omitted, etc. without departing from the teachings herein.

Use of the present device may provide a variety of advantages. For example, the structural frame 148 of the supports 30 being defined on the polyhedron 160 form a tortuous heat transfer path, thus reducing the heat transfer through the supports 30. The apertures 36 defined the supports 30 reduces the heat transfer paths on the structural frame 148 by breaking up direct and straight heat transfer paths. Additionally, the supports 30 have support faces 150 that are limited in surface area due to the apertures 36, which reduces heat transfer between the adjacent surfaces 30 the support faces 150 engage (e.g. the inner surface 20 of the outer wrapper 18). Further, the supports 30 may also allow for the at least partial vacuum 28 to be closer to a complete vacuum due to the supports 30 rigid or at least partially rigid nature. The supports 30 can support the outer wrapper 18 and the liner assembly 22 when there is a greater pressure differential 60 between the insulation cavity 26 and the exterior 62 of the cabinet 12. Additional benefits or advantages may be realized and/or achieved.

The device disclosed herein is further summarized in the following paragraphs and is further characterized by combinations of any and all of the various aspects described herein.

According to one aspect of the present disclosure, a vacuum insulated appliance includes a cabinet defining at least one compartment. The cabinet includes an outer wrapper having an inner surface and a liner assembly having an inner surface. The liner assembly is coupled to the outer wrapper and defines an insulation cavity therebetween. An at least partial vacuum is defined within the insulation cavity biasing the outer wrapper and the liner assembly towards the insulation cavity. A plurality of supports having a substantially spherical structure are disposed in the insulation cavity. A hollow internal volume of each support is in fluid communication with the insulation cavity through a plurality of apertures defined by each support. The plurality of supports is configured to support the outer wrapper and the liner assembly.

According to another aspect, each support of a plurality of supports has a diameter about equal to a thickness between an inner surface of a liner assembly and an inner surface of an outer wrapper.

According to yet another aspect, each support of a plurality of supports includes a first support face engaging an inner surface of a liner assembly and a second support face engaging an inner surface of an outer wrapper.

According to another aspect, each support of a plurality of supports has a diameter less than or equal to about half a thickness between an inner surface of a liner assembly and an inner surface of an outer wrapper.

According to yet another aspect, a plurality of supports includes a first plurality of supports and a second plurality of supports. Each support of the first plurality of supports includes a first support face engaging an inner surface of a liner assembly and a second support face. Each support of the second plurality of supports includes a third support face and a fourth support face engaging an inner surface of an outer wrapper. The second support face of each support of the first plurality of supports engages the third support face of a corresponding support of the second plurality of supports.

According to another aspect, a plurality of support includes a first plurality of supports having a first diameter and a second plurality of supports having a second diameter.

According to yet another aspect, an at least one compartment includes a refrigerator compartment and a freezer compartment. A liner assembly includes a refrigerator liner defines the refrigerator compartment and a freezer liner defines the freezer compartment. An insulation cavity is further defined in a mullion gap between the refrigerator liner and the freezer liner.

According to another aspect of the present disclosure, a vacuum insulated refrigerator includes a structural wrapper defining a refrigerator compartment. The structural wrapper defines an insulation cavity, and a partial vacuum is defined within the insulation cavity. A pressure differential between an outside atmosphere and the insulation cavity biases the structural wrapper toward the insulation cavity. A plurality of supports having a substantially spherical structure are disposed in the insulation cavity. A hollow internal volume of each support is in fluid communication with the insulation cavity through a plurality of apertures defined by each support. The plurality of supports are configured to support the structural wrapper against the biasing of the pressure differential.

According to another aspect, a structural wrapper defines a freezer compartment.

According to yet another aspect, each support has a diameter about equal to a thickness of an insulation cavity.

According to another aspect, each support has a diameter less than or equal to about half a thickness of an insulation cavity.

According to yet another aspect, each support of a plurality of supports includes a plurality of support faces having at least one polygonal perimeter defining a polyhedron having a substantially spherical structure.

According to another aspect, each support face of a plurality of support faces includes a corresponding aperture of a plurality of apertures.

According to yet another aspect, a plurality of support faces includes a first plurality of support faces and a second plurality of support faces. Each support face of the first plurality of support faces has a first polygonal perimeter of at least one polygonal perimeter. Each support face of the second plurality of support faces has a second polygonal perimeter of the at least one polygonal perimeter.

According to another aspect, a polyhedron is a truncated icosahedron, where a first polygonal perimeter is a pentagon, and a second polygonal perimeter is a hexagon.

According to yet another aspect of the present disclosure, a method for manufacturing a vacuum insulated cabinet includes providing an outer wrapper, positioning at least one inner liner within the outer wrapper to define an insulation cavity therebetween, the at least one liner defines at least one compartment, and positioning a plurality of supports within the insulation cavity, each support defines an internal volume and includes a plurality of apertures in fluid communication with the internal volume. The method further includes coupling a trim breaker assembly to the outer wrapper and the at least one liner to seal the insulation cavity and drawing an at least partial vacuum within an insulation cavity defined between the outer wrapper and the at least one liner.

According to another aspect, at least one compartment includes a first compartment and a second compartment. At least one liner includes a first liner defining the first compartment and a second liner defining the second compartment. A step of positioning the at least one inner liner within an outer wrapper includes positioning the first liner within the outer wrapper to partially define an insulation cavity therebetween and positioning the second liner within the outer wrapper to partially define the insulation cavity therebetween. The first liner and the second liner partially define a mullion gap within the insulation cavity therebetween.

According to yet another aspect, each support of a plurality of supports includes a first support face and a second support face. A step of positioning the plurality of supports within an insulation cavity includes positioning the first support face of each support of the plurality of supports to engage an inner surface of an outer wrapper and positioning the second support face of each support of the plurality supports to engage an inner surface of at least one liner.

According to another aspect, a plurality of supports includes a first plurality of supports and a second plurality of supports. Each support of the first plurality of supports includes a first support surface and a second support surface and the second plurality of supports includes a third support surface and a fourth support surface. A step of positioning the plurality of supports within in an insulation cavity includes positioning the first support face of each support of the first plurality of supports to engage an inner surface of an outer wrapper, positioning the third support face of each support of the second plurality of supports to engage the second support face of the first plurality of supports, and positioning the fourth support face of each support of the second plurality of supports to engage an inner surface of at least one liner.

According to yet another aspect, each support of the plurality of supports has a diameter less than about half a thickness between an inner surface of at least one liner and an inner surface of an outer wrapper.

It will be understood by one having ordinary skill in the art that construction of the described disclosure and other components is not limited to any specific material. Other exemplary embodiments of the disclosure disclosed herein may be formed from a wide variety of materials, unless described otherwise herein.

For purposes of this disclosure, the term "coupled" (in all of its forms, couple, coupling, coupled, etc.) generally means the joining of two components (electrical or mechanical) directly or indirectly to one another. Such joining may be stationary in nature or movable in nature. Such joining may be achieved with the two components (electrical or mechanical) and any additional intermediate members being integrally formed as a single unitary body with one another or with the two components. Such joining may be permanent in nature or may be removable or releasable in nature unless otherwise stated.

It is also important to note that the construction and arrangement of the elements of the disclosure as shown in the exemplary embodiments is illustrative only. Although only a few embodiments of the present innovations have been described in detail in this disclosure, those skilled in the art who review this disclosure will readily appreciate that many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter recited. For example, elements shown as integrally formed may be constructed of multiple parts or elements shown as multiple parts may be integrally formed, the operation of the interfaces may be reversed or otherwise varied, the length or width of the structures and/or members or connector or other elements of the system may be varied, the nature or number of adjustment positions provided between the elements may be varied. It should be noted that the elements and/or assemblies of the system may be constructed from any of a wide variety of materials that provide sufficient strength or durability, in any of a wide variety of colors, textures, and combinations. Accordingly, all such modifications are intended to be included within the scope of the present innovations. Other substitutions, modifications, changes, and omissions may be made in the design, operating conditions, and arrangement of the desired and other exemplary embodiments without departing from the spirit of the present innovations.

It will be understood that any described processes or steps within described processes may be combined with other disclosed processes or steps to form structures within the scope of the present disclosure. The exemplary structures and processes disclosed herein are for illustrative purposes and are not to be construed as limiting.

## Claims

1. A vacuum insulated appliance (10), comprising:
a cabinet (12) defining at least one compartment (14, 16), the cabinet (12) including:
an outer wrapper (18) having an inner surface (20); and
a liner assembly (22) having an inner surface (24), the liner assembly (22) coupled to the outer wrapper (18) and defining an insulation cavity (26) therebetween, wherein an at least partial vacuum (28) is defined within the insulation cavity (26) biasing the outer wrapper (18) and the liner assembly (22) towards the insulation cavity (26);
a plurality of supports (30, 30a, 30b, 30c) having a substantially spherical structure (32) disposed in the insulation cavity (26), wherein a hollow internal volume (34) of each support (30, 30a, 30b, 30c) is in fluid communication with the insulation cavity (26) through a plurality of apertures (36) defined by each support (30, 30a, 30b, 30c), and wherein the plurality of supports (30, 30a, 30b, 30c) are configured to support the outer wrapper (18) and the liner assembly (22).

2. The vacuum insulated (10) appliance of claim 1, wherein each support (30, 30a, 30b, 30c) of the plurality of supports (30, 30a, 30b, 30c) has a diameter (200) about equal to a thickness between the inner surface (24) of the liner assembly (22) and the inner surface (20) of the outer wrapper (18).

3. The vacuum insulated appliance (10) of claim 2, wherein each support (30, 30a, 30b, 30c) of the plurality of supports (30, 30a, 30b, 30c) includes a first support face (150, 150c) engaging the inner surface (24) of the outer wrapper (18) and a second support face (150, 150b) engaging the inner surface (20) of the liner assembly (22).

4. The vacuum insulated appliance (10) of either one of claims 1 or 2, wherein each support (30, 30a, 30b, 30c) of the plurality of supports (30, 30a, 30b, 30c) includes a plurality of support faces (150, 150a, 150b, 150c, 150d, 150e, 150f) having at least one polygonal perimeter (152, 152a, 152b) defining a polyhedron (160) having the substantially spherical structure (32).

5. The vacuum insulated appliance (10) of claim 1, wherein each support (30, 30a, 30b, 30c) of the plurality of supports (30, 30a, 30b, 30c) has a diameter (200) about equal to a thickness of the insulation cavity (26).

6. The vacuum insulated appliance (10) of either one of claims 1 or 2, wherein each support (30, 30a, 30b, 30c) of the plurality of supports (30, 30a, 30b, 30c) has a diameter (200) less than or equal to about half a thickness between the inner surface (24) of the liner assembly (22) and the inner surface (20) of the outer wrapper (18).

7. The vacuum insulated appliance (10) of claim 6, wherein the plurality of supports (30, 30a, 30b, 30c) includes a first plurality of supports (30, 30a) and a second plurality of supports (30, 30b), and wherein each support (30, 30a) of the first plurality of supports (30, 30a) includes a first support face (150, 150a) engaging the inner surface (24) of the outer wrapper (18) and a second support face (150, 150b) and each support (30, 30b) of the second plurality of supports (30, 30b) includes a third support face (150, 150e) and a fourth support face (150, 150f) engaging the inner surface (20) of the outer wrapper (18), and further wherein the second support face (150, 150b) of each support of the first plurality of supports engages the third support face of a corresponding support of the second plurality of supports.

8. The vacuum insulated appliance (10) of any one of claims 1-3, wherein the plurality of supports (30, 30a, 30b, 30c) includes a first plurality of supports (30, 30a) having a first diameter and a second plurality of supports (30, 30b) having a second diameter.

9. The vacuum insulated appliance (10) of claim 7, wherein each aperture (36) of the plurality of apertures (36) has at least one aperture perimeter (180), and wherein the aperture perimeter (180) of each aperture (36) is different for each of the support faces (150, 150a, 150b, 150c, 150d, 150e, 150f).

10. The vacuum insulated appliance (10) of claim 7, each aperture (36) of the plurality of apertures (36) has at least one aperture perimeter (180), and wherein the aperture perimeter (180) of each aperture (36) is different between the first plurality of support faces (150, 150a) and the second plurality of support faces (150, 150b).

11. The vacuum insulated appliance (10) of any one of claims 1-10, wherein the at least one compartment (14, 16) includes a refrigerator compartment (14) and a freezer compartment (16).

12. The vacuum insulated appliance (10) of claim 11, wherein the liner assembly (22) includes a refrigerator liner (22a) defining the refrigerator compartment (14) and a freezer liner (22b) defining the freezer compartment (16), and further wherein the insulation cavity (26) is further defined in a mullion gap (64) between the refrigerator liner (22a) and the freezer liner (22b).

13. The vacuum insulated appliance (10) of any one of claims 1-8, wherein an aperture perimeter (180) of each of the apertures (36) is circular.
